# EUROPEAN PATENT SPECIFICATION

(11) **EP 4 671 903 B1**
(45) Date of publication and mention of the grant of the patent: **18.11.2026**
(21) Application number: 24184528.8
(22) Date of filing: 26.06.2024
(51) Int. Cl.: G05D 1/617, G05D 1/648, G05D 105/15, G05D 107/20, G05D 109/10

(54) **SYSTEM AND METHOD FOR COMPLETING A CUTTING CYCLE FOR A ROBOTIC MOWER**
SYSTEM UND VERFAHREN ZUR ERREICHEN EINES SCHNEIDZYKLUS FÜR EINEN ROBOTISCHEN MÄHER
SYSTÈME ET PROCÉDÉ POUR PARACHEVER UN CYCLE DE COUPE POUR UN ROBOT TONDEUSE

(43) Date of publication of application: 31.12.2025
(73) Proprietor: Greenworks (Jiangsu) Co., Ltd, Changzhou, Jiangsu 213023 (CN)
(72) Inventor: BERGSTRÖM, Jonas, 564 36 Bankeryd (SE); LUNDKVIST, André, 566 36 Habo (SE)
(74) Representative: Zacco Sweden AB

(56) References cited:
- CN-A- 112 567 958
- CN-A- 114 521 384
- CN-A- 115 032 993

## Description

### TECHNICAL FIELD

Navigating robotic mowers, obstacle detection in robotic mowers, working area boundaries, path planning in robotic mowers, coverage path planning, and performing a cutting cycle.

### BACKGROUND ART

Self-propelled robotic mowers have become increasingly popular and are now widely used to cut grass within a predetermined working area. The working area is typically limited by a boundary line, for example by means of boundary wires to ensure that the robotic mower does not move outside the area. The boundary wires prevent the robotic mower, objects and living beings from getting damaged or injured. In newer versions of robotic mowers there is no longer any need for boundary wires. Instead, the robotic mower is provided with a positioning unit used to determine the position of the robotic mower and the robotic mower is allowed to move within a predefined boundary line, such as a digital boundary line stored in a memory storage.

A related challenge for mowers is the occurrence of unexpected objects in the working area or other conditions that results in uncut areas. Typically, mowers on a planned path which encounter an unexpected object resort to a predetermined set of rules for circumventing the object and then resumes the original path. Alternatively, mowers may be configured to attempt to cut despite unexpected objects in the working area or other conditions, which may result in the mower being delayed or stuck attempting to cut.

CN114521384A describes a mowing method in which a robotic mower follows a first preset working path and detects a load parameter, such as a cutting motor current, to identify regions requiring further cutting, such as dense grass regions. The mower may subsequently perform cutting in such a region using a second preset working path.

CN112567958A describes a self-walking mowing system configured to identify missed cutting regions within a working boundary and to plan a supplementary work route for performing supplementary cutting of at least one missed cutting region.

CN115032993A describes dynamic full-coverage path planning for cleaning equipment, including dynamic subdivision of a cleaning region and local path planning based on dynamically updated map layers.

Thus, there is a need for a reliable and resource-efficient solution for improving path planning in a working area where difficult to cut areas or unexpected objects may be encountered.

### SUMMARY

The present disclosure relates to tracking the uncut areas of the working area and, upon completing a planned path, determining an auxiliary cutting cycle based on the uncut areas. In examples according to the claimed invention, the auxiliary cutting cycle is determined based on stored mower data providing information about an angle of incidence at which the mower approached an uncut area during the main cutting cycle, so as not to repeat that angle of incidence. One object of the invention is to provide mower path planning arranged to handle uncut areas remaining after said mower performs a first attempt at cutting a working area.

This has in accordance with the present disclosure been achieved by means of a method for path planning for a robotic mower to cut a working area. The method comprises performing a main cutting cycle, and performing an auxiliary cutting cycle. Performing the main cutting cycle comprises
- navigating the mower to cut the working area,
- determining, as the mower performs the main cutting cycle, cut areas of the working area,
- identifying at least one obstacle and/or working area boundary based on sensor data captured by one or more onboard sensors at the mower, and
- avoiding said identified obstacle and/or working area boundary based on a predetermined set of avoidance rules, whereby at least part of the working area at the identified obstacle and/or working area boundary is not cut.

The auxiliary cutting cycle is performed after the main cutting cycle to handle any uncut areas. Performing the auxiliary cutting cycle comprises
- determining at least one uncut area of the working area based on the determined cut areas and based on the performed avoiding of said identified obstacle and/or working area boundary; and
- determining a path for the mower for performing the auxiliary cutting cycle (182) based on said at least one uncut area, wherein said path is arranged to cut any of said determined at least one uncut area.

Determining the cut areas of the working area comprises generating and storing cutting data indicative of said cut areas.

The cutting data comprises stored mower data indicative of the mower movement over the working area and/or the corresponding cutting operation of the mower performed during the main cutting cycle.

The stored mower data provides information about an angle of incidence at which the mower approached said at least one uncut area during the main cutting cycle.

Determining the path for the mower for performing the auxiliary cutting cycle is based on said stored mower data so as to not repeat an angle of incidence at which the mower approached said at least one uncut area during the main cutting cycle.

This has the advantage of allowing determining a path so that a mower may time-efficiently perform the main cutting cycle, and thereafter handle any uncut areas by performing the auxiliary cutting cycle. This further has the advantage of allowing the mower to determine an auxiliary path using information about how the mower previously approached an uncut area. The mower may thereby avoid repeating an approach geometry used during the main cutting cycle, which may improve the likelihood that the uncut area is successfully cut during the auxiliary cutting cycle.

In some embodiments, navigating the mower during the main cutting cycle is performed based on a first set of rules, and wherein navigating the mower during the auxiliary cutting cycle is based on the determined path and a second set of rules, wherein the first and second set of rules are at least partially different.

This has the advantage of allowing the mower to operate with different priorities during the main cutting cycle and the auxiliary cutting cycle. For example, the mower may operate with the priority of quickly performing the main cutting cycle while accepting some areas not becoming cut, and the mower may operate with the priority of thoroughly attempting to cut the uncut areas during the auxiliary cutting cycle.

In some embodiments, performing the main cutting cycle comprises navigating the mower along a planned path arranged to allow the mower to cut the working area.

This has the advantage of allowing the mower to perform the main cutting cycle by following a planned path and providing a path to return to should the mower need to deviate from the planned path, thereby providing a pathing framework for the main cutting cycle.

In some embodiments, determining the path corresponding to the auxiliary cutting cycle for the mower to cut any determined uncut area is based on a determined perimeter of the uncut area based on said stored mower data.

This has the advantage of allowing the auxiliary cutting cycle to be determined based on the movement of the mower during the auxiliary cutting cycle, such as attempting previously unsuccessful cutting operations at a different angle of approach. This further has the advantage of determining the auxiliary cutting cycle based on path planning for a subset of the working area defined by the determined perimeter of the uncut area.

In some embodiments, performing the main cutting cycle comprises obtaining a digital representation of the working area; wherein determining cut areas of the working area comprises determining cutting data indicative of cut areas in the digital representation based on the movement of the mower and the cutting device of the mower; and determining the uncut area of the working area is based on the areas not indicated as cut in the digital representation.

This has the advantage of allowing the use of a model of the working area in order to better determine the uncut area. This further has the advantage of allowing the area determined to not be cut be presented to and reviewed by a user.

The present disclosure further relates to a computer program product comprising a non-transitory computer-readable storage medium having thereon a computer program comprising program instructions, the computer program being loadable into a processor and configured to cause the processor to perform the method for path planning for a robotic mower to cut a working area according to the above method.

The present disclosure further relates to a robotic mower for navigating and cutting within a working area. The mower comprises a chassis, a propulsion system, one or more sensors, a computer, a memory and a position determining device, wherein the computer is arranged to control the propulsion system, the one or more sensors, the memory and the position determining device. The computer is arranged to
- determine a main cutting cycle and an auxiliary cutting cycle for the working area,
- navigate the mower over the working area utilizing the position determining device and the propulsion system based on the determined cutting cycle,
- determine, as the mower performs the cutting cycle, cut areas of the working area and store cutting data indicative of said determined cut areas in the memory,- identify at least one obstacle and/or working area boundary based on sensor data captured by the one or more onboard sensors at the mower,
- navigate the mower over the working area based on avoiding said identified obstacle and/or working area boundary according to a predetermined set of avoidance rules and storing corresponding mower data indicative of mower navigation to avoiding said identified obstacle and/or working area boundary;
- determine at least one uncut area of the working area based on the determined cut areas and based on the avoiding of said identified obstacle and/or working area boundary; and
- determine a path for the mower for performing the auxiliary cutting cycle based on said at least one uncut area, wherein said path is arranged to cut any of said determined at least one uncut area.

The cutting data comprises stored mower data indicative of the mower movement over the working area and/or the corresponding cutting operation of the mower performed during the main cutting cycle. The stored mower data provides information about an angle of incidence at which the mower approached said at least one uncut area during the main cutting cycle. The computer is arranged to determine the path for performing the auxiliary cutting cycle based on said stored mower data so as to not repeat an angle of incidence at which the mower approached said at least one uncut area during the main cutting cycle .

### BRIEF DESCRIPTION OF THE DRAWINGS

Fig. 1 shows schematically a mower in a working area.
Fig. 2 illustrates a mower performing a main cutting cycle in a working area.
Fig. 3 illustrates a mower performing an auxiliary cutting cycle in a working area.
Fig. 4 depicts a top-down view of a work area for a mower.
Fig. 5 shows a method for path planning for a robotic mower to cut a working area.
Fig. 6 depicts schematically a data processing unit comprising a computer program product for path planning for a robotic mower to cut a working area.

### DETAILED DESCRIPTION

Throughout the figures, same reference numerals refer to same parts, concepts, and/or structures. Consequently, what will be said regarding a reference numeral in one figure applies equally well to the same reference numeral in other figures unless explicitly stated otherwise.

### Terms and expressions

The term working area relates to an area in which a mower is arranged to move and perform cutting operations. For example, a mower may be arranged to perform cutting operations in one or more working areas. In some example scenarios, a mower performing a cutting cycle may be instructed to perform a cutting operation on the whole working area. It is to be understood that a working area may be divided into multiple working areas, and a mower may be arranged to individually cut each of said working areas. Herein, unless stated otherwise, the term working area is used for the area intended to be cut.

The term path relates to the short term or long term navigation goal of a mower. In some examples, an initial path is determined over the working area for a whole cutting cycle, such as a path in a back-and-forth pattern configured to give the mower the opportunity to cut the whole working area. In some examples, a relatively short path is iteratively determined as the mower cuts the working area. It is to be understood that the path as such is typically an abstraction for navigational planning and not a tangible entity in the physical world.

The term cutting cycle relates to a mower cutting the working area or parts thereof. Typically, a cutting cycle relates to a path through a working area and a set of criteria for cutting said working area. In example drawings both the cutting cycle and its corresponding path are represented by the same lines, however, it is to be understood that in the cutting cycle typically is indicative of additional information such as which parts of the working area to be cut.

The term main cutting cycle relates to the mower cutting following normal operation. Typically, main cutting cycle relates to cutting at least the majority of the working area to be cut, such as cutting the relatively open parts of the working area. It is to be understood that main cutting cycle may relate to cutting a working area that is a subset of the one or more working areas the mower is arranged to perform cutting operations in. In some examples, the main cutting cycle initially attempts to cut the whole working area.

The expression "the uncut areas of the working area" relates areas of the working area not successfully cut by the main cutting cycle. Typically, the main cutting cycle is performed to cut the whole working area while registering where the working area is cut, and the remaining areas are determined to be uncut areas. The uncut areas relate to incomplete cutting of the working area for any reason. Typically, the uncut areas occur because of the mower avoiding obstacles in the working area or had issues with performing the cutting operation itself, such as approaching an uneven area to be cut from a problematic angle. It is to be understood the term "uncut areas" here typically does not include the area blocked by the footprint of an unexpected non-moving obstacle, and instead relates to the "accessible but not cut"-areas of the work area. That is to say, an auxiliary cutting cycle, typically, doesn't attempt to drive through the position of an identified non-moving obstacle, but instead attempts to reach uncut areas while avoiding said obstacle.

The term auxiliary cutting cycle relates to a cutting cycle following the main cutting cycle arranged to cut at least some uncut areas of the working area based on the execution of the main cutting cycle. Typically, the auxiliary cutting cycle is performed utilizing a different set of criteria than the main cutting cycle. Typically, the auxiliary cutting cycle is performed such that the mower more actively attempts to reach the uncut areas of the working area, whereas the main cutting cycle may be configured to more readily continue past uncut areas and resume an initial path for the remaining working area in order to cut the majority of the work area as speedily as possible.

The expression "performing a cutting operation" relates to a mower navigating over an area of a working area and cutting said area. Typically, the cutting operation cuts grass in areas of the working area to be cut while moving along a planned path according to a cutting cycle. It is to be understood that the cutting operation is not limited to cutting grass, and may comprise performing other types of maintenance of the working area, such as leaf mulching or weed control.

The term coverage path planning relates to methods and algorithms for determining an optimized path for a mower to traverse a working area while ensuring that it covers every part of that working area or a determined subset of said working area. Typically, a coverage path planning algorithm attempts to calculate a path that minimizes travelling distance of a mower performing a cutting operation under some set of criteria. The expression "to cover a part of the working area" relates to bringing the mower in range of the area to allow performing a cutting operation at said area.

The term robotic mower relates to a robotic lawn mower that is an autonomous device arranged to cut a working area. Herein the term mower relates to a robotic mower.

The term map data relates to information indicative of the working area of the mower. For example, the map data may represent an environmental model, or comprise values suitable for representing the working area in an environmental model. The map data typically relates to the geometry of the working area and any guide-wires, loading stations, permanent boundaries, cutting priorities for regions of the working area, or other terrain information relevant for the mower. Typically, a mower's map data primarily describes the information used to plan paths through the working area. Typically, information of the state of the mower itself, such as the mower position, is not comprised in the map data.

The term obstacle relates to any unexpected identified object in the working area.

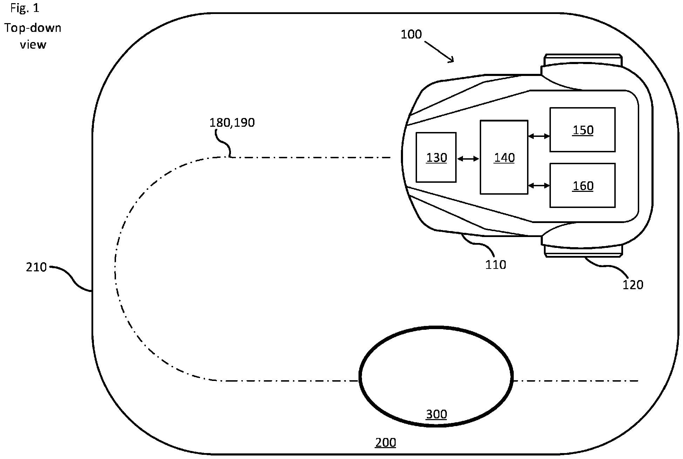

Fig. 1 shows schematically a mower in a working area. The mower 100 comprises a chassis 110, a propulsion system 120, one or more sensors 130, a computer 140, a memory 150, a position determining device 160 and a cutting device (not shown). The computer 140 is arranged to control the propulsion system 120, the one or more sensors 130, the memory 150 and the position determining device 160.
the computer 140 is arranged to- determine a main cutting cycle 180 and an auxiliary cutting cycle 182 for the working area 200,
- navigate the mower 100 over the working area 200 utilizing the propulsion system 120 based on the determined main cutting cycle 180 and auxiliary cutting cycle 182,
- determine, as the mower 100 performs the main cutting cycle 180 utilizing the cutting device, cut areas of the working area 200 and store cutting data indicative of said determined cut areas in the memory 150,
- identify at least one obstacle 300 and/or working area boundary 210 based on sensor data captured by the one or more onboard sensors 130 at the mower 100,
- navigate the mower 100 over the working area 200 based on avoiding said identified obstacle 300 and/or working area boundary 210 according to a predetermined set of avoidance rules,
- determine at least one uncut area 220 of the working area 200 based on the determined cut areas and based on the avoiding of said identified obstacle 300 and/or working area boundary 210, and
- determine a path 192 for the mower 100 for performing the auxiliary cutting cycle 182 based on said at least one uncut area 220, wherein said path 192 is arranged to cut any of said determined at least one uncut area 220.

The cutting data comprises stored mower data indicative of the mower movement over the working area 200 and/or the corresponding cutting operation of the mower 100 performed during the main cutting cycle 180. The stored mower data provides information about an angle of incidence at which the mower 100 approached said at least one uncut area 220 during the main cutting cycle 180. The computer 140 is arranged to determine the path 192 for performing the auxiliary cutting cycle 182 based on said stored mower data so as not to repeat an angle of incidence at which the mower 100 approached said at least one uncut area 220 during the main cutting cycle 180.

In Fig. 1-3, both the cutting cycle and its corresponding path are represented by the same line, however, it is to be understood that in the cutting cycle typically is indicative of additional information (not shown), such as which parts of the working area are to be cut.

In some examples, the mower 100 further comprises a communication device arranged to wirelessly communicate, and wherein the computer 140 is arranged to control the communication device. In some of these examples, the computer 140 is arranged to transmit queries to a user via the communication device relating to the determined cut areas and/or the auxiliary cutting cycle.

In some examples, the computer 140 is arranged to determine cut areas of the working area 200 based on sensor data from the one or more sensors 130 and/or based on the operation of the cutting device. It is to be understood that the cut areas may be determined from sensor data from sensors measuring the working area 200, or by monitoring the cutting device executing the cutting operation.

In some examples, the cutting device comprises a cutting bar, a rotary blade, a cutting reel, flail blade, a mulching blade, and/or a sickle bar.

In some examples, the one or more sensors 130 comprises at least one non-contact sensor. In some of these examples, the at least one non-contact sensor comprises a camera and/or a radar.

In some examples, the memory 150 comprises information indicative of a boundary 210 of the working area 200, wherein the computer 140 is arranged to determine cutting cycles 180 based on avoiding intersecting the working area boundary.

In fig. 1 an obstacle 300 is in the way of the path 190 corresponding to the initial cutting cycle 180.

In some examples, the computer 140 is arranged to follow a systematic grid approach and/or to have access to a plurality of strategies to handle unexpected obstacles during their cutting cycles.

The computer 140 is arranged to
- identify at least one obstacle 300 and/or working area boundary 210 based on measured sensor data captured by one or more onboard sensors 130 at the mower 100, and
- avoid said identified obstacle 300 and/or working area boundary 210 by controlling said a propulsion system 120 based on a predetermined set of avoidance rules.

In some examples, the computer 140 is arranged to avoid said identified obstacle 300 and/or working area boundary 210 by utilizing dynamic path re-planning. In some of these examples, the dynamic path re-planning comprises utilizing Voronoi diagrams and/or Boustrophedon motions, thus allowing the mower to adjust its trajectory to avoid obstacles. Typically, the ideal outcome is to find an alternative path that ensures complete cutting while avoiding the obstacle 300 and without significantly increasing the distance travelled. In reality, avoiding an obstacle 300 may result in both the area under the obstacle 300 and adjacent area(s) not being cut.

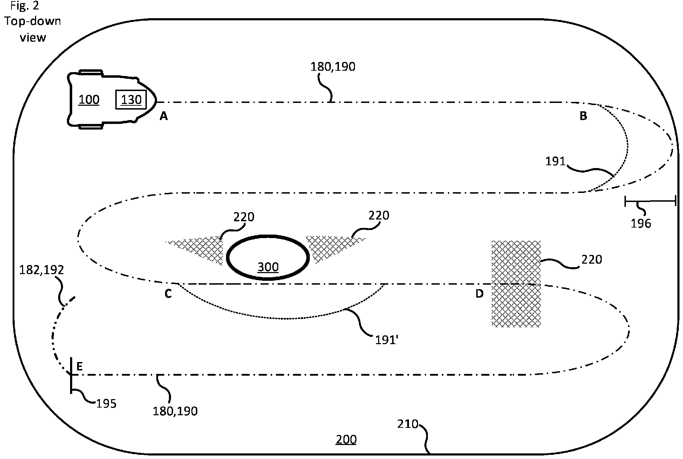

Fig. 2 illustrates a mower performing a main cutting cycle 180 in a working area 200. A path 190 corresponding to the main cutting cycle 180 leads the mower 100 from position A, to positions B through E. The example initial path 190 corresponding to the main cutting cycle 180 is configured to allow the mower 100 to cut the whole working area 200, based on an assumed state of the working area 200.

Arriving at position B the set of sensors 130 of the mower 100 measure sensor data allowing the computer to detect that path 190 runs too close to the working area boundary 210 and the computer navigates the mower 100 along an avoidance path 191 leaving and re-joining the path 190 corresponding to the main cutting cycle 180 based on a first set of criteria.

In some of these examples, a set of criteria for navigating the mower 100 comprises a minimum distance 196 to any identified obstacle or working area boundary 210.

Arriving at position C the set of sensors 130 of the mower 100 measure sensor data allowing the computer 140 to detect an obstacle 300 in the path 190 and the computer 140 navigates the mower 100 along a second avoidance path 191' leaving and re-joining the path 190 corresponding to the main cutting cycle 180 based on a first set of criteria. Upon the mower 100 taking the second avoidance path 191' to avoid the obstacle 300 the computer 140 determines that two areas are not cut at the obstacle.

Arriving at position D the computer 140 determines based on the operation of the mower cutting device that a region traversed by the mower after position D was not successfully cut.

The mower arrives at position E which represents the end of the path 190 corresponding to the main cutting cycle 180. Upon arriving at position E the computer 140 determines the uncut areas 220 of the work area 200 based on sensor data from the one or more sensors 130 and information indicative of the operation of the cutting device of the mower 100. The computer 140 determines an auxiliary cutting cycle 182 based on the uncut areas 220 of the work area 200 and navigates the mower 100 according to a path 192 corresponding to the auxiliary cutting cycle 182.

In some examples, the computer 140 is arranged to determine a path 192 for the mower 100 for performing an auxiliary cutting cycle 182 based on said uncut area 220 after completing the main cutting cycle 190.

In some examples, the computer 140 is arranged to determine a path 190,192 for the mower 100 for performing the main cutting cycle 180 and/or the auxiliary cutting cycle 182 utilizing a coverage path planning algorithm. In some of these examples, the path 190,192 is determined based on minimizing travelling distance of the mower 100 performing a cutting operation. In some examples, the coverage path planning algorithm is arranged to determine a path 190,192 bringing the mower 100 in range of the area to be cut that allows performing a cutting operation at said area, such as a path bringing a rotating cutter bar over the whole area. Algorithms and methods for coverage path planning is a well-established research field.

In the example step, the set of sensors perform an additional measurement comprising at least capturing a digital image of the obstacle 300.

In some examples, the mower 100 detects the obstacle 300 based on the sensor data, detecting comprise determining whether the identified obstacle 300 is a moving or non-moving obstacle.

In some examples, upon the mower 100 detecting the obstacle based on the sensor data, the mower 100 obtains additional sensor data by performing measurements from a plurality of viewpoints in relation to the obstacle 300. For example, the mower 100 may be arranged to, upon initially detecting the obstacle 300, perform a series of movements to capture sensor data of the obstacle 300. In some examples, the computer 140 determines the auxiliary cutting cycle 182 based on said additional sensor data.

In some examples, the user query comprises an image or illustration of the identified obstacle.

It is to be understood that in some embodiments the mower 100 is arranged to independently determine cutting cycles 180,182.

In some examples, the mower 100 is arranged to determine paths 190,191 corresponding to cutting cycles 180,182 based on map data 400.

In some examples, the computer 140 is arranged to determine cutting data based on the operation of the cutting device. Typically, the determined cutting data based on the operation of the cutting device is indicative of if cutting is being successfully performed, such as the rotation of a cutter bar.

In some examples, the computer 140 is arranged to store cutting data for two or more main cutting cycles 180, and perform the auxiliary cutting cycle 182 based on determined cut areas for each of said main cutting cycles 180,182.

In some examples, the computer 140 is arranged to
- calculate and/or obtain a digital representation of the working area, and
- determine cutting data indicative of cut areas in the digital representation.

In some of these examples, determining cutting data indicative of cut areas in the digital representation is based on the movement of the mower 100 and the cutting device of the mower 100, such as the path 190,192 and the diameter of the cutting bar.

In some of these examples, the computer 140 is arranged to determine the uncut area of the working area based on the parts not indicated as cut in the digital representation.

In some of these examples, said digital representation of the working area is stored in the memory 150. In some of these examples, the computer 140 is arranged to obtain digital representation of the working area from the memory 150, and/or store determined cutting data indicative of cut areas in the digital representation in the memory 150.

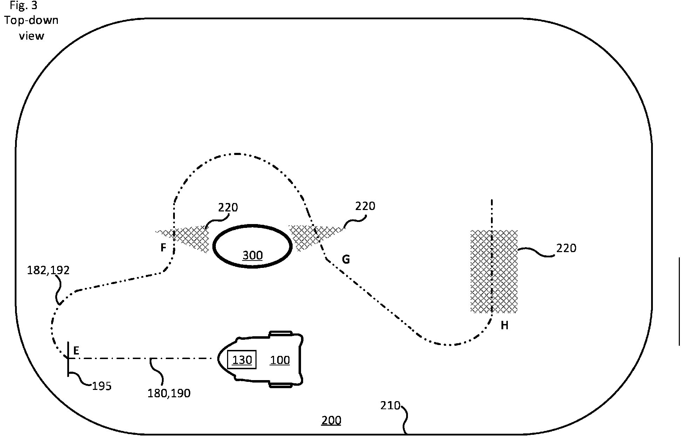

Fig. 3 illustrates a mower performing an auxiliary cutting cycle in a working area. The example scenario depicted in Fig. 3 is a continuation of the depiction in Fig. 2.

The mower 100 arrives at position E which represents the end of the path 190 corresponding to the main cutting cycle 180, and the start of the path 191 corresponding to the auxiliary cutting cycle 181. Upon arriving at position E the computer 140 of the mower 100 determines the uncut areas 220 of the work area 200 based on sensor data from the one or more sensors 130 and information indicative of the operation of the cutting device of the mower 100. The computer 140 determines the auxiliary cutting cycle 182 based on the uncut areas 220 of the work area 200 and navigates the mower 100 according to a path 192 corresponding to the auxiliary cutting cycle 182.

In some examples, the computer 140 is arranged to identify at least one obstacle 300, wherein identifying at least one obstacle 300 comprises determining the part of the work area covered by said obstacle(s) 300.

In some examples, the computer 140 is arranged to determine the uncut areas 220 of the work area 200 based on omitting the part of the work area 200 determined covered by obstacle (s) 300. In some examples, the computer 140 is arranged to determine the uncut areas 220 of the work area 200 based on omitting the part of the work area 200 determined covered by non-moving obstacle (s) 300.

It is to be understood that, typically, the auxiliary cutting cycle 182 does not attempt to reach under the footprint of non-moving obstacles 300, and instead focuses on cutting uncut areas while avoiding colliding with the obstacles.

The mower 100 navigates from position E to F according to the determined path 192. The computer 140 navigates the mower 100 from position F to position G according to a second set of criteria while performing cutting operation at the determined uncut areas 220. In the example scenario of fig. 2 and 3 the second set of criteria allow the mower 100 to navigate closer to the obstacle 300 compared to the first set of criteria corresponding to the main cutting cycle 180.

The mower 100 follows the path 192 corresponding to the auxiliary cutting cycle 182, wherein said path 192 approaches the determined uncut areas 220 after position H at a significantly different angle of incidence compared to the angle of incidence at position D for the main cutting cycle 180 in Fig. 2. In the example scenario, the mower cuts the determined uncut areas 220 upon performing the auxiliary cutting cycle 182.

In some examples, the mower 100 measures sensor data with the one or more sensors 130 during the auxiliary cutting cycle 182, and the computer 140 is arranged to dynamically update the auxiliary cutting cycle 182 based on said measured sensor data. In some of these examples, the computer 140 is arranged to continuously update the auxiliary cutting cycle 182 based on said measured sensor data.

In some examples, the computer 140 is arranged to determine a path 192 for the mower 100 for performing the auxiliary cutting, wherein determining a path 192 is based on the angle of incidence towards uncut areas 220 of the path 190 corresponding to the main cutting cycle 180.

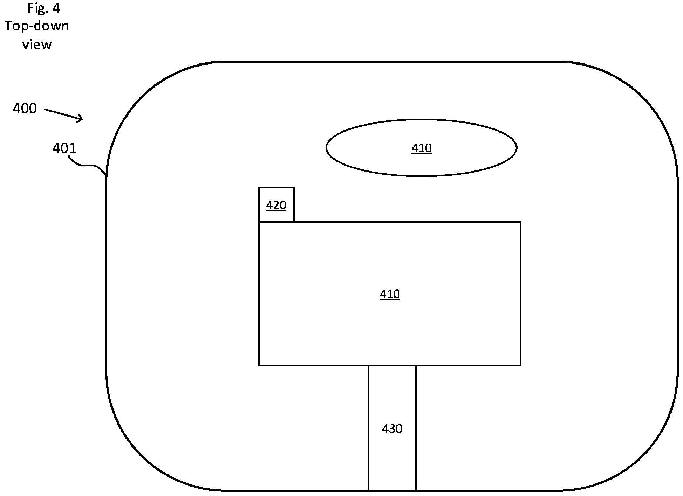

Fig. 4 illustrates a representation of map data for a working area used by the mower to determine cutting cycles and their paths. The example map data represents a curtilage comprising a detached house and its surrounding lawn. The example map data 400 comprises values indicative of a working area boundary 401, two permanent structures 410 corresponding to a building and a swimming pool; a mower charging station 420; a not to be cut area 430 corresponding to a paved path.

It is to be understood that the working area boundary 401 in the map data 400 typically matches the perimeter of the working area, however, the working area boundary 401 may intentionally, or unintentionally, be set to be different from the perimeter of the working area.

In some examples, the map data comprises a working area boundary 401 for a mower that is user defined.

It is to be understood that how far beyond the working area boundary 401 the map data 400 extends, and how accurately the map data 400 matched the real world environment may vary greatly between embodiments of the invention. A bare bones example of the map data 400 comprises values indicative of the working area boundary 401, and the permanent structures 410. An advanced example of the map data 400 may represent the real world environment in and/or around the working area with a 3D, a quasi-3D, or a 2.5D environmental model.

Map data 400 comprised in a mower is typically changed by the mower and/or a user. For example, a mower may be arranged to independently include detected obstacles into the map data 400 based on sensor data from one or more sensors comprised in the mower, and arranged to, with the user's verification, include permanent structures 410 to the map data 400, such as a new structure added to the working area.

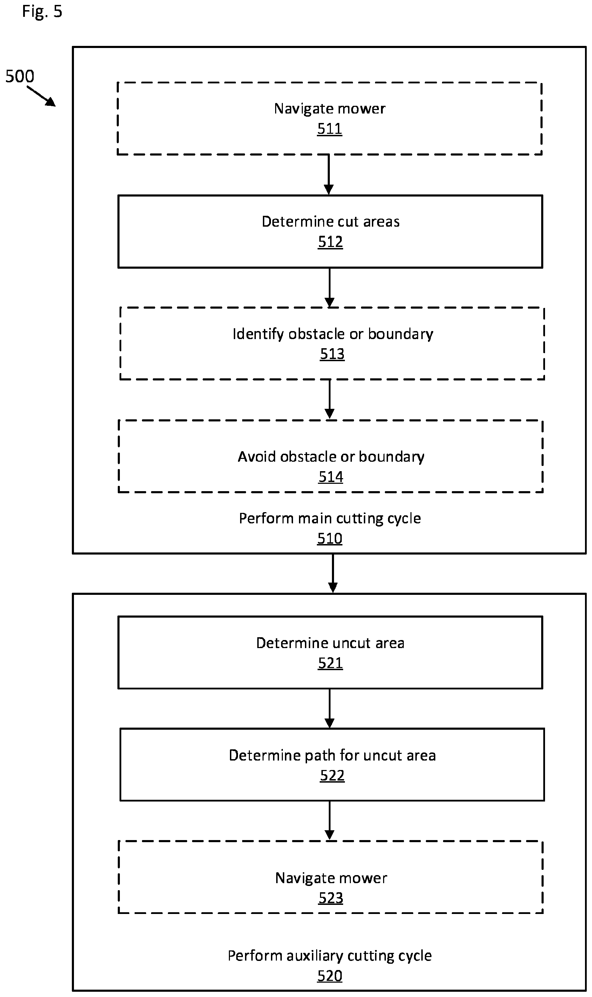

Fig. 5 shows an example method for path planning for a robotic mower to cut a working area. The method 500 comprises
performing 510 a main cutting cycle, and performing 520 an auxiliary cutting cycle;
wherein performing 510 the main cutting cycle comprises
   - determining 512, as the mower performs the main cutting cycle, cut areas of the working area;
   and
wherein performing 520 the auxiliary cutting cycle comprises
   - determining 521 an uncut area of the working area based on the determined cut areas; and
   - determining 522 a path for the mower for performing the auxiliary cutting cycle based on said uncut area, wherein said path is arranged to cut any of said determined uncut area.

In some examples, performing 510 the main cutting cycle comprises
- identifying 513 at least one obstacle and/or working area boundary based on sensor data captured by one or more onboard sensors at the mower, and
- avoiding 514 said identified obstacle and/or working area boundary based on a predetermined set of avoidance rules, whereby at least part of the working area at the identified obstacle and/or working area boundary is not cut;
and
performing 520 the auxiliary cutting cycle comprises
- determining 521 the uncut area further based on the performed avoiding 514 of said identified obstacle and/or working area boundary.

Performing 510 the main cutting cycle comprises navigating 511 the mower to cut the working area. In some examples, performing 520 the auxiliary cutting cycle comprises controlling 523 the mower movement based on the determined path.

It is to be understood that according to examples of the method comprising navigating 511 the mower may allow the method to both determine paths for the mower and also execute said paths. It is to be understood that the invention relates to other examples of the method that only measures the operation of the mower and/or the environment around the mower and then determines a path based on said measurement, without actively controlling the navigation or cutting operation of the mower. Preferably the method of the invention is, or is part of, a method that governs the complete autonomous operation of the mower.

In some of these examples, navigating 511 the mower comprises moving the mower along the path corresponding to the cutting cycle. In some of these examples, navigating 511 the mower comprises determining said path corresponding to the cutting cycle. In some of these examples, said path corresponding to the cutting cycle is determined utilizing a coverage path planning algorithm. In some of these examples, said path corresponding to the cutting cycle is determined based on minimizing travelling distance of the mower.

Determining 512 cut areas of the working area comprises determining and storing cutting data indicative of said cut areas on a memory storage.

In some examples, performing 510 the main cutting cycle comprises obtaining a digital representation of the working area, and wherein determining 512 cut areas of the working area comprises determining cutting data indicative of cut areas in the digital representation. In some of these examples, determining cutting data indicative of cut areas in the digital representation is based on the movement of the mower and the cutting device of the mower. In some of these examples, determining 521 the uncut area of the working area is based on the areas not indicated as cut in the digital representation. For example, the digital representation of the working area may be indicated as cut based on the path travelled by the mower and the diameter of the cutting bar of the mower.

In some examples, the method comprises transmitting data indicative of, and/or presenting a visualisation of, the areas not indicated as cut in the digital representation.

In some examples, performing 510 the main cutting cycle, and/or performing 520 the auxiliary cutting cycle cutting comprises operating the cutting device of the mower. In some of these examples, determining 512 the cut areas of the working area comprises generating and storing cutting data indicative of the operation of the cutting device at said cut areas, and determining 521 the uncut area is further based on said stored cutting data, and/or wherein determining 522 the path for the mower to cut any determined uncut areas is further based on said stored cutting data.

In some examples, identifying 513 at least one obstacle comprises determining the part of the work area covered said obstacle(s).

In some examples, determining 521 the uncut areas of the work area comprises omitting the part of the work area determined to be covered by any obstacles. In some examples, determining 521 the uncut areas of the work area comprises omitting the part of the work area determined to be covered by any non-moving obstacles.

It is to be understood that the area under the footprint of any obstacles are, typically, not included in the uncut areas of the work area. The uncut areas of the work area relate to areas that are expected to be accessible by the mower.

In examples according to the claimed invention, the stored cutting data comprises stored mower data indicative of the mower movement over the working area and/or the corresponding cutting operation of the mower performed during the main cutting cycle.

It is to be understood that generally cutting data is indicative of the cut area of the working, which may be visualized as virtually paint on a digital representation of the working area at positions where it is cut. Mower data further describes how the mower navigated over the cutting area and may contain information on how successful cutting operation was along that path. In examples according to the claimed invention, the stored mower data provides information about at which angle of incidence the mower approached uncut areas of the working area, and the path for the mower for performing the auxiliary cutting cycle may be determined so to not repeat unsuccessful approach angles towards said uncut areas. In examples according to the claimed invention, the path for the mower for performing the auxiliary cutting cycle is determined based on the stored mower data so as not to repeat an angle of incidence at which the mower approached the uncut area during the main cutting cycle.

In some examples, navigating 511 the mower during the main cutting cycle is performed based on a first set of rules, and wherein navigating 523 the mower during the auxiliary cutting cycle is based on the determined path and a second set of rules, wherein the first and second set of rules are at least partially different.

In some examples, identifying at least one obstacle comprises, capturing sensor data by the set of sensors from a plurality of viewpoints in relation to the identified obstacle. Capturing sensor data by the set of sensors from a plurality of viewpoints relates to obtaining additional sensor data beyond the sensor data required to identify the presence of the obstacle. In some of these examples, capturing sensor data by the set of sensors from a plurality of viewpoints comprises controlling the movement of the mower.

In some examples, the method 500 comprises navigating 510 the mower along a path determined based the map data and cutting at least part of the working area. This example corresponds to detecting obstacles and updating the map data during normal mower operation.

In some examples, determining 522 the path corresponding to the auxiliary cutting cycle for the mower to cut any determined uncut area is based on a determined perimeter of the uncut area based on said stored mower data.

In some examples, determining 522 the path corresponding to the auxiliary cutting cycle for the mower to cut any determined uncut area comprises utilizing a coverage path planning algorithm. In some of these examples, the path is determined based on minimizing travelling distance of the mower 100 performing the cutting operation. In some examples, determining 522 the path corresponding to the auxiliary cutting cycle for the mower to cut any determined uncut area, wherein said path is arranged to bring the mower in range of said uncut area that allows performing a cutting operation at said uncut area, such as a path bringing a rotating cutter bar over said uncut area.

In some examples, the method comprises transmitting a query and receiving a query answer relating to any identified 513 obstacle, and wherein determining 521 the uncut area is further based on the received query answer. In some of these examples, the query comprises an image of the identified obstacle captured by one or more of the set of onboard sensors and/or based on corresponding captured sensor data. For example, the received query answer may comprise an instruction that a region around said obstacle should be excluded from the uncut area.

In some examples, the query comprises a visualisation of the areas not indicated as cut in the digital representation of the working area.

In some examples, the map data further comprises a defined working area boundary for the mower. In some examples, the wherein the working area boundary is be user defined. For example, the mower may be configured to avoid determining a path that intersects the working area boundary.

In some example, the set of onboard sensors comprises at least one non-contact sensor. In some of these examples, the at least one non-contact sensor comprises a camera and/or a radar.

In some examples, the main cutting cycle is performed 510 two or more times before performing 520 the auxiliary cutting cycle, and wherein determining 521 the uncut areas is based on determined cut areas for each main cutting cycle.

In some examples, the method 500 is a computer implemented method.

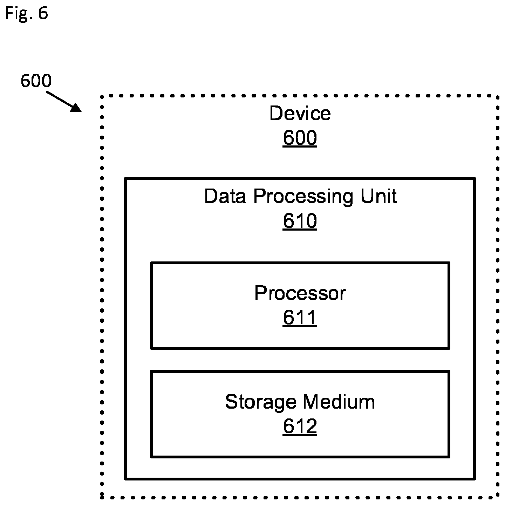

Fig. 6 depicts schematically a data processing unit comprising a computer program product for path planning for a robotic mower to cut a working area. Fig.6 depicts a data processing unit 610 comprising a computer program product comprising a non-transitory computer-readable storage medium 612. The non-transitory computer-readable storage medium 612 having thereon a computer program comprising program instructions. The computer program is loadable into a data processing unit 610 and is configured to cause a processor 611 to carry out the method.

In some examples, the data processing unit 610 is comprised in a mower and the computer program product is stored on a memory storage comprised in the mower.

## Claims

1. Method for path planning for a robotic mower to cut a working area, said method (500) comprises performing (510) a main cutting cycle (180), and performing (520) an auxiliary cutting cycle (182);
wherein performing (510) the main cutting cycle (180) comprises
- navigating (511) the mower (100) to cut the working area (200),
- determining (512), as the mower (100) performs the main cutting cycle (180), cut areas of the working area (200),
- identifying (513) at least one obstacle (300) and/or working area boundary (210) based on sensor data (131) captured by one or more onboard sensors (130) at the mower (100), and
- avoiding (514) said identified obstacle (300) and/or working area boundary (210) based on a predetermined set of avoidance rules, whereby at least part of the working area (200) at the identified obstacle (300) and/or working area boundary (210) is not cut,
and
wherein the auxiliary cutting cycle is performed after the main cutting cycle to handle any uncut areas,
wherein performing (520) the auxiliary cutting cycle (182) comprises
- determining (521) at least one uncut area (220) of the working area (200) based on the determined cut areas and based on the performed avoiding (514) of said identified obstacle (300) and/or working area boundary (210); and
- determining (522) a path (192) for the mower (100) for performing the auxiliary cutting cycle (182) based on said at least one uncut area (220), wherein said path is arranged to cut any of said determined at least one uncut area (220),
wherein determining (512) the cut areas of the working area (200) comprises generating and storing cutting data indicative of said cut areas,
wherein the cutting data comprises stored mower data indicative of the mower movement over the working area (200) and/or the corresponding cutting operation of the mower (100) performed during the main cutting cycle (180),
wherein the stored mower data provides information about an angle of incidence at which the mower (100) approached said at least one uncut area (220) during the main cutting cycle (180), and
wherein determining (522) the path (192) for the mower (100) for performing the auxiliary cutting cycle (182) is based on said stored mower data so as to not repeat an angle of incidence at which the mower (100) approached said at least one uncut area (220) during the main cutting cycle (180).

2. The method according to claim 1, wherein performing (510) the main cutting cycle (180) comprises and/or wherein performing (520) the auxiliary cutting cycle (182) comprises controlling (523) the mower movement based on the determined path (192).

3. The method according to claim 2, wherein navigating (511) the mower (100) during the main cutting cycle (180) is performed based on a first set of rules, and wherein navigating the mower (100) during the auxiliary cutting cycle (182) is based on the determined path (192) and a second set of rules, wherein the first and second set of rules are at least partially different.

4. The method according to any of the preceding claims, wherein avoiding (514) said identified obstacle (300) and/or working area boundary (210) is based on the mower (100) maintaining at least a minimum distance (196) to said identified obstacle (300) and/or working area boundary (210).

5. The method according to any of the preceding claims, wherein performing (510) the main cutting cycle (180) comprises navigating (511) the mower (100) along a planned path (190) arranged to allow the mower (100) to cut the working area (200).

6. The method according to any of the preceding claims, wherein avoiding (514) said identified obstacle (300) and/or working area boundary (210) is based on resuming the mower's journey along the planned path (190).

7. The method according to any of the preceding claims, wherein determining (512) the cut areas of the working area (200) comprises generating and storing cutting data indicative of said cut areas, and
wherein determining (521) the uncut area (220) is further based on said stored cutting data,
and/or wherein determining (522) the path (192) for the mower (100) to cut any determined uncut areas (220) is further based on said stored cutting data.

8. The method according to claim 7, wherein cutting data comprises generated mower data indicative of the mower movement over the working area (200) and the corresponding cutting operation of the mower (100) performed during the main cutting cycle (180).

9. The method according to claim 8, wherein determining (522) the path (192) corresponding to the auxiliary cutting cycle (182) for the mower (100) to cut any determined uncut area (220) is based on a determined perimeter of the uncut area based on said stored mower data.

10. The method according to any of the preceding claims, wherein the main cutting cycle (180) is performed (510) two or more times before performing (520) the auxiliary cutting cycle (182), and wherein determining (521) the uncut areas (220) is based on determined cut areas for each main cutting cycle (180).

11. The method according to claim 7, wherein performing (510) the main cutting cycle (180) comprises obtaining a digital representation of the working area (200);
wherein determining (512) cut areas of the working area (200) comprises determining cutting data indicative of cut areas in the digital representation based on the movement of the mower (100) and a cutting device of the mower (100); and
determining (521) the uncut area (220) of the working area (200) is based on the areas not indicated as cut in the digital representation.

12. A computer program product comprising a non-transitory computer-readable storage medium (612) having thereon a computer program comprising program instructions, the computer program being loadable into a processor (611) and configured to cause the processor (611) to perform the method (500) for path (192) planning for a robotic mower (100) to cut a working area (200) according to any preceding claim.

13. A robotic mower for navigating and cutting within a working area, the mower (100) comprises a chassis (110), a propulsion system (120), one or more sensors (130), a computer (140), a memory (150) and a position determining device (160), wherein the computer (140) is arranged to control the propulsion system (120), the one or more sensors (130), the memory (150) and the position determining device (160), and wherein the computer (140) is arranged to
- determine a main cutting cycle (180) and an auxiliary cutting cycle (182) for the working area (200);
- navigate the mower (100) over the working area (200) utilizing the position determining device (160) and the propulsion system (120) based on the determined cutting cycle (180,182);
- determine, as the mower (100) performs the main cutting cycle (180), cut areas of the working area (200) and store cutting data indicative of said determined cut areas in the memory (150);
- identify at least one obstacle (300) and/or working area boundary (210) based on sensor data (131) captured by the one or more onboard sensors (130) at the mower (100);
- navigate the mower (100) over the working area (200) based on avoiding said identified obstacle (300) and/or working area boundary (210) according to a predetermined set of avoidance rules and storing corresponding mower data indicative of mower navigation to avoiding said identified obstacle (300) and/or working area boundary (210);
- determine at least one uncut area (220) of the working area (200) based on the determined cut areas and based on the avoiding of said identified obstacle (300) and/or working area boundary (210); and
- determine a path (192) for the mower (100) for performing the auxiliary cutting cycle (182) based on said at least one uncut area (220), wherein said path (192) is arranged to cut any of said determined at least one uncut area (220),
wherein the cutting data comprises stored mower data indicative of the mower movement over the working area (200) and/or the corresponding cutting operation of the mower (100) performed during the main cutting cycle (180),
wherein the stored mower data provides information about an angle of incidence at which the mower (100) approached said at least one uncut area (220) during the main cutting cycle (180), and
wherein the computer (140) is arranged to determine the path (192) for performing the auxiliary cutting cycle (182) based on said stored mower data so as to not repeat an angle of incidence at which the mower (100) approached said at least one uncut area (220) during the main cutting cycle (180).

## Patentansprüche

1. Verfahren zur Pfadplanung für einen Robotermäher zum Mähen eines Arbeitsbereichs, wobei das Verfahren (500) das Durchführen (510) eines Hauptmähzyklus (180) und das Durchführen (520) eines Hilfsmähzyklus (182) umfasst;
wobei das Durchführen (510) des Hauptmähzyklus (180) umfasst
- Navigieren (511) des Mähers (100) zum Mähen des Arbeitsbereichs (200);
- während der Mäher (100) den Hauptmähzyklus (180) durchführt, Bestimmen (512) von gemähten Bereiche des Arbeitsbereichs (200),
- Identifizieren (513) mindestens eines Hindernisses (300) und/oder einer Arbeitsbereichsgrenze (210) auf der Grundlage von Sensordaten (131), die von einem oder mehreren am Mäher (100) angeordneten Sensoren (130) erfasst wurden, und
- Umfahren (514) des identifizierten Hindernisses (300) und/oder der Arbeitsbereichsgrenze (210) auf der Grundlage eines vorgegebenen Satzes von Umfahrungsregeln, wodurch zumindest ein Teil des Arbeitsbereichs (200) an dem identifizierten Hindernis (300) und/oder der Arbeitsbereichsgrenze (210) nicht gemäht wird, und
wobei der Hilfsmähzyklus nach dem Hauptmähzyklus durchgeführt wird, um etwaige ungemähte Bereiche zu bearbeiten,
wobei das Durchführen (520) des Hilfsmähzyklus (182) umfasst:
- Bestimmen (521) mindestens eines ungemähten Bereichs (220) des Arbeitsbereichs (200) auf der Grundlage der bestimmten gemähten Bereiche sowie auf der Grundlage des durchgeführten Umfahrens (514) des identifizierten Hindernisses (300) und/oder der Arbeitsbereichsgrenze (210); und
- Bestimmen (522) eines Pfades (192) für den Mäher (100) zur Durchführung des Hilfsmähzyklus (182) auf der Grundlage des mindestens einen ungemähten Bereichs (220), wobei der Pfad so dazu eingerichtet ist, dass jeder der bestimmten mindestens einen ungemähten Bereiche (220) gemäht wird,
wobei das Bestimmen (512) der gemähten Bereiche des Arbeitsbereichs (200) das Erzeugen und Speichern von Mähdaten umfasst, die die gemähten Bereiche anzeigen,
wobei die Mähdaten gespeicherte Mäherdaten umfassen, die die Bewegung des Mähers über den Arbeitsbereich (200) und/oder den entsprechenden Mähvorgang des Mähers (100) während des Hauptmähzyklus (180) anzeigen,
wobei die gespeicherten Mäherdaten Informationen über einen Anfahrwinkel bereitstellen, mit dem sich der Mäher (100) während des Hauptmähzyklus (180) dem mindestens einen ungemähten Bereich (220) genähert hat, und
wobei das Bestimmen (522) des Pfades (192) für den Mäher (100) zur Durchführung des Hilfsmähzyklus (182) auf den gespeicherten Mäherdaten basiert, sodass ein Anfahrwinkel, mit dem sich der Mäher (100) während des Hauptmähzyklus (180) dem mindestens einen ungemähten Bereich (220) genähert hat, nicht wiederholt wird.

2. Verfahren nach Anspruch 1, wobei das Durchführen (510) des Hauptmähzyklus (180) umfasst und/oder wobei das Durchführen (520) des Hilfsmähzyklus (182) das Steuern (523) der Bewegung des Mähers auf der Grundlage des bestimmten Pfades (192) umfasst.

3. Verfahren nach Anspruch 2, wobei das Navigieren (511) des Mähers (100) während des Hauptmähzyklus (180) auf der Grundlage eines ersten Regelsatzes erfolgt und wobei das Navigieren des Mähers (100) während des Hilfsmähzyklus (182) auf dem bestimmten Pfad (192) sowie eines zweiten Regelsatzes basiert, wobei sich der erste und der zweite Regelsatz zumindest teilweise voneinander unterscheiden.

4. Verfahren nach einem der vorhergehenden Ansprüche, wobei das Umfahren (514) des identifizierten Hindernisses (300) und/oder der Arbeitsbereichsgrenze (210) darauf basiert, dass der Mäher (100) mindestens einen Mindestabstand (196) zu dem identifizierten Hindernis (300) und/oder der Arbeitsbereichsgrenze (210) einhält.

5. Verfahren nach einem der vorhergehenden Ansprüche, wobei das Durchführen (510) des Hauptmähzyklus (180) das Navigieren (511) des Mähers (100) entlang eines geplanten Pfades (190) umfasst, der so eingerichtet ist, dass der Mäher (100) den Arbeitsbereich (200) mähen kann.

6. Verfahren nach einem der vorhergehenden Ansprüche, wobei das Umfahren (514) des identifizierten Hindernisses (300) und/oder der Arbeitsbereichsgrenze (210) darauf basiert, dass der Mäher seine Fahrt entlang des geplanten Pfades (190) wieder aufnimmt.

7. erfahren nach einem der vorhergehenden Ansprüche, wobei das Bestimmen (512) der gemähten Bereiche des Arbeitsbereichs (200) das Erzeugen und Speichern von Mähdaten umfasst, die die gemähten Bereiche anzeigen, und
wobei das Bestimmen (521) des ungemähten Bereichs (220) ferner auf den gespeicherten Mähdaten basiert und/oder wobei das Bestimmen (522) des Pfades (192) für den Mäher (100) zum Mähen etwaiger bestimmter ungemähter Bereiche (220) ferner auf den gespeicherten Mähdaten basiert.

8. Verfahren nach Anspruch 7, wobei die Mähdaten erzeugte Mäherdaten umfassen, die die Bewegung des Mähers über den Arbeitsbereich (200) und den entsprechenden Mähvorgang des Mähers (100) kennzeichnen, der während des Hauptmähzyklus (180) durchgeführt wurde.

9. Verfahren nach Anspruch 8, wobei das Bestimmen (522) des dem Hilfsmähzyklus (182) entsprechenden Pfades (192) für den Mäher (100) zum Mähen eines bestimmten ungemähten Bereichs (220) auf einem bestimmten Umfang des ungemähten Bereichs basiert, der auf den gespeicherten Mäherdaten beruht.

10. Verfahren nach einem der vorhergehenden Ansprüche, wobei der Hauptmähzyklus (180) zwei- oder mehrmals durchgeführt wird (510), bevor der Hilfsmähzyklus (182) durchgeführt wird (520), und wobei das Bestimmen (521) der ungemähten Bereiche (220) auf den bestimmten gemähten Bereichen jedes Hauptmähzyklus (180) basiert.

11. Verfahren nach Anspruch 7, wobei das Durchführen (510) des Hauptmähzyklus (180) das Erhalten einer digitalen Darstellung des Arbeitsbereichs (200) umfasst;
wobei das Bestimmen (512) von gemähten Bereichen des Arbeitsbereichs (200) das Bestimmen von Mähdaten umfasst, die gemähte Bereiche in der digitalen Darstellung auf der Grundlage der Bewegung des Mähers (100) und einer Schneideinrichtung des Mähers (100) anzeigen; und
wobei das Bestimmen (521) des ungemähten Bereichs (220) des Arbeitsbereichs (200) auf den Bereichen basiert, die in der digitalen Darstellung nicht als gemäht angezeigt sind.

12. Computerprogrammprodukt, umfassend ein nichtflüchtiges computerlesbares Speichermedium (612), auf dem ein Computerprogramm mit Programmanweisungen gespeichert ist, wobei das Computerprogramm in einen Prozessor (611) ladbar ist und so konfiguriert ist, dass es den Prozessor (611) veranlasst, das Verfahren (500) zur Planung eines Pfads (192) für einen Robotermäher (100) zum Mähen eines Arbeitsbereichs (200) nach einem der vorhergehenden Ansprüche durchzuführen.

13. Robotermäher zum Navigieren und Mähen innerhalb eines Arbeitsbereichs, wobei der Mäher (100) ein Fahrgestell (110), ein Antriebssystem (120), einen oder mehrere Sensoren (130), einen Computer (140), einen Speicher (150) und eine Positionsbestimmungseinrichtung (160) umfasst, wobei der Computer (140) dazu eingerichtet ist, das Antriebssystem (120), den einen oder die mehreren Sensoren (130), den Speicher (150) und die Positionsbestimmungseinrichtung (160) zu steuern, und wobei der Computer (140) dazu eingerichtet ist:
- Bestimmen eines Hauptmähzyklus (180) und eines Hilfsmähzyklus (182) für den Arbeitsbereich (200);
- Navigieren des Mähers (100) über den Arbeitsbereich (200) unter Verwendung der Positionsbestimmungseinrichtung (160) und des Antriebssystems (120) auf der Grundlage des bestimmten Mähzyklus (180, 182);
- Bestimmen gemähter Bereiche des Arbeitsbereichs (200), während der Mäher (100) den Hauptmähzyklus (180) durchführt, und Speichern von Mähdaten, die die bestimmten gemähten Bereiche kennzeichnen, im Speicher (150);
- Identifizieren mindestens eines Hindernisses (300) und/oder einer Arbeitsbereichsgrenze (210) auf der Grundlage von Sensordaten (131), die von dem einen oder den mehreren am Mäher (100) angeordneten Sensoren (130) erfasst wurden;
- Navigieren des Mähers (100) über den Arbeitsbereich (200) auf der Grundlage des Umfahrens des identifizierten Hindernisses (300) und/oder der Arbeitsbereichsgrenze (210) gemäß einem vorgegebenen Satz von Umfahrungsregeln und Speichern entsprechender Mäherdaten, die die Mähernavigation zum Umfahren des identifizierten Hindernisses (300) und/oder der Arbeitsbereichsgrenze (210) anzeigen;
- Bestimmen mindestens eines ungemähten Bereichs (220) des Arbeitsbereichs (200) auf der Grundlage der bestimmten gemähten Bereiche sowie auf der Grundlage des Umfahrens des identifizierten Hindernisses (300) und/oder der Arbeitsbereichsgrenze (210); und
- Bestimmen eines Pfades (192) für den Mäher (100) zur Durchführung des Hilfsmähzyklus (182) auf der Grundlage des mindestens einen ungemähten Bereichs (220), wobei der Pfad (192) so eingerichtet ist, dass jeder der bestimmten mindestens einen ungemähten Bereiche (220) gemäht wird,
wobei die Mähdaten gespeicherte Mäherdaten umfassen, die die Bewegung des Mähers über den Arbeitsbereich (200) und/oder den entsprechenden Mähvorgang des Mähers (100) während des Hauptmähzyklus (180) anzeigen,
wobei die gespeicherten Mäherdaten Informationen über einen Anfahrwinkel bereitstellen, mit dem sich der Mäher (100) während des Hauptmähzyklus (180) dem mindestens einen ungemähten Bereich (220) genähert hat, und
wobei der Computer (140) dazu eingerichtet ist, den Pfad (192) zur Durchführung des Hilfsmähzyklus (182) auf der Grundlage der gespeicherten Mäherdaten so zu bestimmen, dass ein Anfahrwinkel, mit dem sich der Mäher (100) während des Hauptmähzyklus (180) dem mindestens einen ungemähten Bereich (220) genähert hat, nicht wiederholt wird.

## Revendications

1. Procédé de planification de trajectoire pour un robot tondeuse pour couper une zone de travail, ledit procédé (500) comprenant la réalisation (510) d'un cycle de coupe principal (180), et la réalisation (520) d'un cycle de coupe auxiliaire (182) ;
dans lequel la réalisation (510) du cycle de coupe principal (180) comprenant les étapes consistant à :
- faire naviguer (511) la tondeuse (100) pour couper la zone de travail (200),
- déterminer (512), au fur et à mesure que la tondeuse (100) réalise le cycle de coupe principal (180), des zones coupées de la zone de travail (200),
- identifier (513) au moins un obstacle (300) et/ou une limite de zone de travail (210) sur la base de données de capteur (131) capturées par un ou plusieurs capteurs embarqués (130) au niveau de la tondeuse (100), et
- éviter (514) ledit obstacle identifié (300) et/ou ladite limite de zone de travail (210) sur la base d'un ensemble prédéterminé de règles d'évitement, moyennant quoi au moins une partie de la zone de travail (200) au niveau de l'obstacle identifié (300) et/ou de la limite de zone de travail (210) n'est pas coupée, et
dans lequel le cycle de coupe auxiliaire étant réalisé après le cycle de coupe principal pour traiter toute zone non coupée, dans lequel la réalisation (520) du cycle de coupe auxiliaire (182) comprenant les étapes consistant à :
- déterminer (521) au moins une zone non coupée (220) de la zone de travail (200) sur la base des zones coupées déterminées et sur la base de l'évitement réalisé (514) dudit obstacle identifié (300) et/ou de ladite limite de zone de travail (210) ; et
- déterminer (522) un trajet (192) pour la tondeuse (100) pour réaliser le cycle de coupe auxiliaire (182) sur la base de ladite au moins une zone non coupée (220), dans lequel ledit trajet étant agencé pour couper l'une quelconque de ladite au moins une zone non coupée (220) déterminée,
dans lequel la détermination (512) des zones coupées de la zone de travail (200) comprenant la génération et le stockage de données de coupe indiquant lesdites zones coupées,
dans lequel les données de coupe comprenant des données de tondeuse stockées indiquant le mouvement de la tondeuse sur la zone de travail (200) et/ou l'opération de coupe correspondante de la tondeuse (100) réalisée pendant le cycle de coupe principal (180),
dans lequel les données de tondeuse stockées fournissant des informations concernant un angle d'incidence sous lequel la tondeuse (100) a abordé ladite au moins une zone non coupée (220) pendant le cycle de coupe principal (180), et
dans lequel la détermination (522) du trajet (192) pour la tondeuse (100) pour réaliser le cycle de coupe auxiliaire (182) étant basée sur lesdites données de tondeuse stockées de sorte qu'un angle d'incidence sous lequel la tondeuse (100) a abordé ladite au moins une zone non coupée (220) pendant le cycle de coupe principal (180) ne soit pas répété.

2. Procédé selon la revendication 1, dans lequel la réalisation (510) du cycle de coupe principal (180) et/ou la réalisation (520) du cycle de coupe auxiliaire (182) comprenant la commande (523) du mouvement de la tondeuse sur la base du trajet (192) déterminé.

3. Procédé selon la revendication 2, dans lequel la navigation (511) de la tondeuse (100) pendant le cycle de coupe principal (180) étant réalisée sur la base d'un premier ensemble de règles, et dans lequel la navigation de la tondeuse (100) pendant le cycle de coupe auxiliaire (182) étant basée sur le trajet (192) déterminé et un second ensemble de règles, les premier et second ensembles de règles étant au moins partiellement différents.

4. Procédé selon l'une quelconque des revendications précédentes, dans lequel l'évitement (514) dudit obstacle identifié (300) et/ou de ladite limite de zone de travail (210) étant basé sur le maintien par la tondeuse (100) d'au moins une distance minimale (196) par rapport audit obstacle identifié (300) et/ou à ladite limite de zone de travail (210).

5. Procédé selon l'une quelconque des revendications précédentes, dans lequel la réalisation (510) du cycle de coupe principal (180) comprenant la navigation (511) de la tondeuse (100) le long d'un trajet planifié (190) agencé pour permettre à la tondeuse (100) de couper la zone de travail (200).

6. Procédé selon l'une quelconque des revendications précédentes, dans lequel l'évitement (514) dudit obstacle identifié (300) et/ou de ladite limite de zone de travail (210) étant basé sur la reprise du parcours de la tondeuse le long du trajet planifié (190).

7. Procédé selon l'une quelconque des revendications précédentes, la détermination (512) des zones coupées de la zone de travail (200) comprenant la génération et le stockage de données de coupe indiquant lesdites zones coupées, et
dans lequel la détermination (521) de la zone non coupée (220) étant en outre basée sur lesdites données de coupe stockées, et/ou dans lequel la détermination (522) du trajet (192) pour la tondeuse (100) pour couper toute zone non coupée (220) déterminée étant en outre basée sur lesdites données de coupe stockées.

8. Procédé selon la revendication 7, dans lequel les données de coupe comprenant des données de tondeuse générées indiquant le mouvement de la tondeuse sur la zone de travail (200) et l'opération de coupe correspondante de la tondeuse (100) réalisée pendant le cycle de coupe principal (180).

9. Procédé selon la revendication 8, dans lequel la détermination (522) du trajet (192) correspondant au cycle de coupe auxiliaire (182) pour la tondeuse (100) pour couper toute zone non coupée (220) déterminée étant fondée sur un périmètre déterminé de la zone non coupée à partir desdites données de tondeuse stockées.

10. Procédé selon l'une quelconque des revendications précédentes, dans lequel le cycle de coupe principal (180) étant réalisé (510) au moins deux fois avant la réalisation (520) du cycle de coupe auxiliaire (182), et la détermination (521) des zones non coupées (220) étant basée sur des zones coupées déterminées pour chaque cycle de coupe principal (180).

11. Procédé selon la revendication 7, dans lequel la réalisation (510) du cycle de coupe principal (180) comprenant l'obtention d'une représentation numérique de la zone de travail (200) ;
dans lequel la détermination (512) de zones coupées de la zone de travail (200) comprenant la détermination de données de coupe indiquant des zones coupées dans la représentation numérique sur la base du mouvement de la tondeuse (100) et d'un dispositif de coupe de la tondeuse (100) ; et
la détermination (521) de la zone non coupée (220) de la zone de travail (200) étant basée sur les zones non indiquées comme coupées dans la représentation numérique.

12. Produit de programme d'ordinateur comprenant un support de stockage non transitoire lisible par ordinateur (612) sur lequel se trouve un programme d'ordinateur comprenant des instructions de programme, le programme d'ordinateur pouvant être chargé dans un processeur (611) et étant configuré pour amener le processeur (611) à réaliser le procédé (500) de planification de trajet (192) pour un robot tondeuse (100) pour couper une zone de travail (200) selon l'une quelconque des revendications précédentes.

13. Robot tondeuse pour naviguer et couper dans une zone de travail, la tondeuse (100) comprenant un châssis (110), un système de propulsion (120), un ou plusieurs capteurs (130), un ordinateur (140), une mémoire (150) et un dispositif de détermination de position (160), dans lequel l'ordinateur (140) étant agencé pour commander le système de propulsion (120), l'un ou plusieurs capteurs (130), la mémoire (150) et le dispositif de détermination de position (160), et dans lequel l'ordinateur (140) étant agencé pour :
- déterminer un cycle de coupe principal (180) et un cycle de coupe auxiliaire (182) pour la zone de travail (200) ;
- faire naviguer la tondeuse (100) sur la zone de travail (200) en utilisant le dispositif de détermination de position (160) et le système de propulsion (120) sur la base du cycle de coupe (180,182) déterminé ;
- déterminer, au fur et à mesure que la tondeuse (100) réalise le cycle de coupe principal (180), des zones coupées de la zone de travail (200) et stocker des données de coupe indiquant lesdites zones coupées déterminées dans la mémoire (150) ;
- identifier au moins un obstacle (300) et/ou une limite de zone de travail (210) sur la base de données de capteur (131) capturées par l'un ou plusieurs capteurs embarqués (130) au niveau de la tondeuse (100) ;
- faire naviguer la tondeuse (100) sur la zone de travail (200) sur la base de l'évitement dudit obstacle identifié (300) et/ou de ladite limite de zone de travail (210) selon un ensemble prédéterminé de règles d'évitement, et du stockage de données de tondeuse correspondantes indiquant la navigation de la tondeuse pour éviter ledit obstacle identifié (300) et/ou ladite limite de zone de travail (210) ;
- déterminer au moins une zone non coupée (220) de la zone de travail (200) sur la base des zones coupées déterminées et sur la base de l'évitement dudit obstacle identifié (300) et/ou de ladite limite de zone de travail (210) ; et
- déterminer un trajet (192) pour la tondeuse (100) pour réaliser le cycle de coupe auxiliaire (182) sur la base de ladite au moins une zone non coupée (220), dans lequel ledit trajet (192) étant agencé pour couper l'une quelconque de ladite au moins une zone non coupée (220) déterminée,
dans lequel les données de coupe comprenant des données de tondeuse stockées indiquant le mouvement de la tondeuse sur la zone de travail (200) et/ou l'opération de coupe correspondante de la tondeuse (100) réalisée pendant le cycle de coupe principal (180),
dans lequel les données de tondeuse stockées fournissant des informations concernant un angle d'incidence sous lequel la tondeuse (100) a abordé ladite au moins une zone non coupée (220) pendant le cycle de coupe principal (180), et
dans lequel l'ordinateur (140) étant agencé pour déterminer le trajet (192) pour réaliser le cycle de coupe auxiliaire (182) sur la base desdites données de tondeuse stockées de sorte qu'un angle d'incidence sous lequel la tondeuse (100) a abordé ladite au moins une zone non coupée (220) pendant le cycle de coupe principal (180) ne soit pas répété.
